# FASCICULE DE BREVET EUROPEEN

(11) **EP 1 990 550 B1**
(45) Date de publication et mention de la délivrance du brevet: **12.04.2017**
(21) Numéro de dépôt: 07360016.5
(22) Date de dépôt: 09.05.2007
(51) Int. Cl.: F16B 12/44, A47B 21/00

(54) **Système de fixation d'un pied à un plateau de table ou de bureau**
System zur Befestigung eines Fußes an einer Tisch- oder Schreibtischplatte
System for attaching a foot to a table or desk top

(43) Date de publication de la demande: 12.11.2008
(73) Titulaire: Steelcase Inc., Grand Rapids, Michigan 49501-1967 (US)
(72) Inventeur: Acchione, Bruno, 67000 Strasbourg (FR); Flanet, Daniel, 67300 Schiltigheim (FR)
(74) Mandataire: Littolff, Denis

(56) Documents cités:
- DE-A1- 3 026 882
- DE-C1- 19 518 007
- US-A- 3 504 877

## Description

La présente invention se situe dans le domaine du mobilier, plus particulièrement dans celui des tables ou bureaux. De telles pièces de mobilier comportent à la base un plateau et des pieds supports, qui sont en général fixées sous ledit plateau par l'intermédiaire de platines de fixation. Ces dernières présentent par exemple une ouverture dans laquelle est insérée l'extrémité supérieure du pied, des moyens de fixation de la platine sur l'extrémité du pied étant alors prévus. Cette platine est par ailleurs également fixée sous le plateau, par exemple au moyen de vis.

Les platines de fixations connues n'ont dans la plupart des cas qu'une fonction de liaison mécanique entre l'extrémité supérieure du pied et le plateau. Or, il peut être intéressant d'utiliser la dimension verticale d'un pied ou piètement, reliant de surcroît le plateau ou plan de travail supérieur au sol, pour guider des câbles ou fils véhiculant l'énergie nécessaire au fonctionnement des luminaires ou d'autres éléments équipant les bureaux actuels (écrans, ordinateurs...). Par ailleurs, afin d'optimiser l'utilisation de tables ou de bureaux, il est parfois prévu de fixer sur ou sous le plateau des accessoires ou des supports d'accessoires permettant d'améliorer leur ergonomie. L'existence d'une zone de fixation sous le plateau pour le fixer à un pied peut donc constituer une opportunité pour la fixation concomitante de tels accessoires ou supports d'accessoires.

Un système de fixation similaire à celui de l'invention est décrit dans le document DE19518007C1.

Le but de la présente invention est de concrétiser ces potentialités en proposant un système qui joue un rôle à la fois pour le guidage des câbles et pour l'installation d'accessoires tout en assurant la fixation du pied au plateau. A ces effets, l'invention est définie dans la revendication 1.

On tire donc profit de la nécessité de la fixation du pied au plateau pour élargir la palette de fonctionnalité du bureau en ajoutant un accessoire ou un porte-accessoire. Ces derniers obéissent à un mode d'utilisation optionnel, c'est-à-dire que l'utilisateur peut les rendre actifs ou inactifs, selon leur position par rapport au plateau.

Plus précisément, les moyens de guidage consistent en :
- des logements guidant le coulissement de l'accessoire ou du porte-accessoire ;
- des butée limitant le déplacement par coulissement au déploiement et à la rétractation.

Selon le cas, l'accessoire ou le porte accessoire peut prendre des positions intermédiaires si cela améliore sa commodité d'usage.

Selon une configuration possible, l'accessoire et le porte-accessoire comportent deux branches parallèles coulissant dans les logements de guidage, et deux surfaces perpendiculaires à la direction du coulissement prévues pour coopérer avec les butées.

L'amplitude du déplacement est ainsi contrôlé, les butées fixant les deux positions extrêmes d'utilisation. L'accessoire ou le porte-accessoire peut comporter une base en U dont les branches coulissent dans les logements et dont la base sert de butée à l'extraction, et une paroi d'allure verticale servant de poignée à l'extraction et de butée en position rétractée.

La paroi d'allure verticale, outre sa vocation de poignée, peut également servir de support à un élément extérieur, ou d'élément d'accrochage.

La paroi en question peut d'ailleurs être constituée de deux portions séparées par une fente d'allure verticale.

La partie coulissante peut être réalisée en matière synthétique, et elle peut comporter une tige de rigidification métallique en U incorporée dans sa base.

Cette tige est, selon une possibilité, logée dans une gorge de l'accessoire ou du porte-accessoire, avec une portion radiale de la surface des branches dépassant au contact des logements de guidage.

La fonction de ladite tige n'est donc pas seulement de rigidification de l'ensemble, mais d'aide au glissement de l'ensemble coulissant par rapport au logement, fonction qui est facilitée par le matériau utilisé pour la tige.

Il est à noter que l'invention ne concerne pas seulement le système de fixation tel qu'il a été présenté auparavant, mais également un bureau qui l'incorpore.

Elle va à présent être décrite plus en détail, en référence aux figures annexées à la présente description, dans lesquelles :
- la figure 1 est une vue en perspective éclatée d'une configuration selon l'invention ;
- la figure 2 est une représentation des éléments de la figure 1 lorsqu'ils sont assemblés ; et

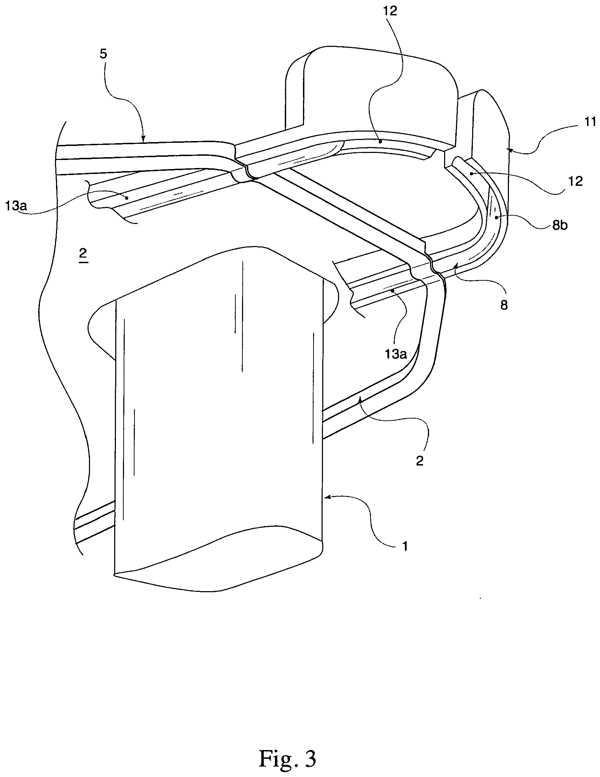

- la figure 3 montre, en perspective et sous un autre angle d'incidence (par en bas), l'assemblage de la figure 2.

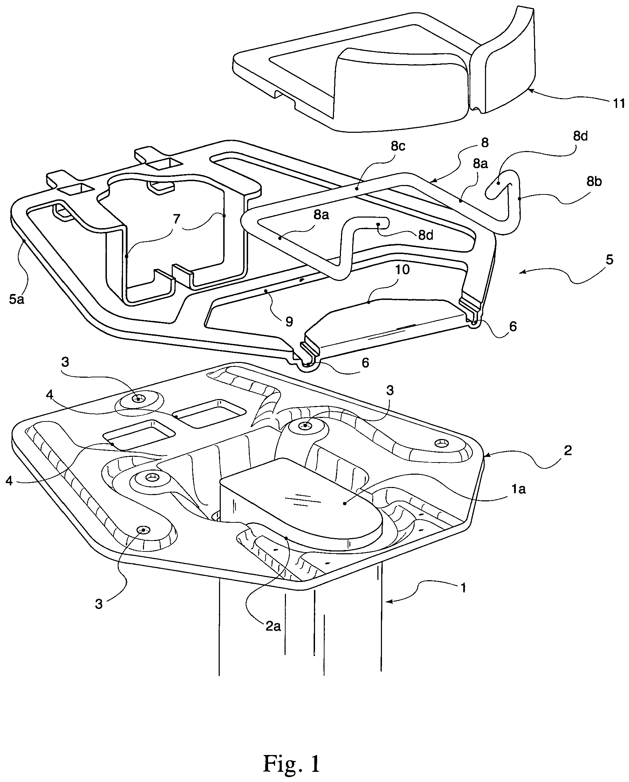

La figure 1 montre un pied (1) destiné à supporter un plateau (non représenté). Ledit pied (1) présente une extrémité supérieure (1 a) sur laquelle est montée une platine de fixation (2). Cette dernière comporte par exemple une ouverture (2a), obtenu par exemple par déformation, dans laquelle est engagée l'extrémité supérieure (1 a) dudit pied (1).

La platine de fixation (2) présente également des perçages (3) destinés à être traversés par des vis (non représentées) permettant de fixer ladite platine (2) à un plateau. Des ouvertures complémentaires (4) sont également prévues dans la platine de fixation pour le passage d'éléments (7) supports de câbles.

La figure 1 montre également une pièce de liaison (5), par exemple réalisée en matière synthétique rigide et dont la forme épouse sensiblement le contour de la platine de fixation (2). La pièce de liaison (5) présente une forme ajourée dont au moins le contour extérieur (5a) est destiné à être enserré entre ladite platine de fixation (2) et le plateau.

Cette pièce (5) présente par ailleurs des logements (6), obtenus par exemple par moulage, qui sont destinés à recevoir et à guider un accessoire.

La pièce de liaison (5) comporte en outre des bras coudés (7) s'étendant selon une direction sensiblement orthogonale à son plan moyen d'extension en vue de s'insérer dans des ouvertures complémentaires (4) de la platine de fixation (2). Une fois la pièce de liaison (5) montée sur la platine (2), les bras coudés (7), qui s'étendent par en dessous, constituent un support et/ou un moyen de guidage pour des câbles électriques.

Les bras coudés (7) sont de préférence orientés l'un vers l'autre, leurs extrémités libres en regard présentant un écartement et une flexibilité permettant l'engagement de câbles électriques.

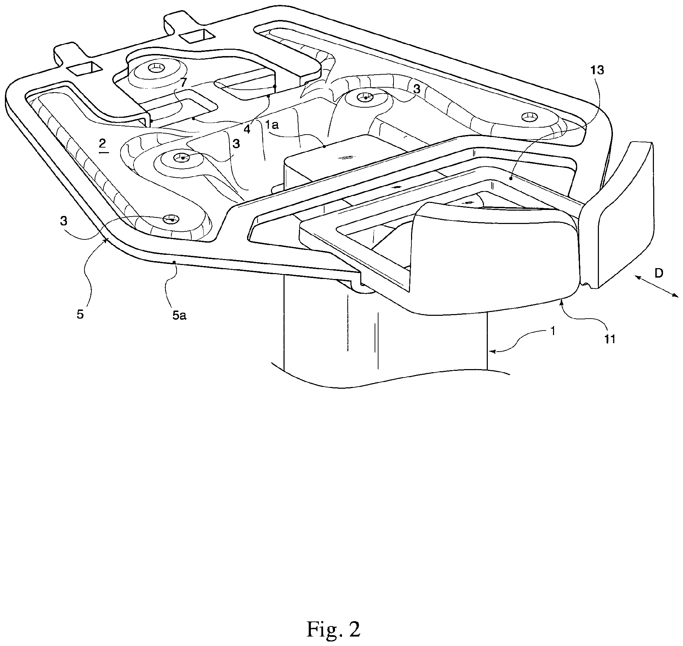

L'accessoire ou porte-accessoire positionné et guidé dans les logements (6) se compose par exemple d'une tige métallique (8) en U dont deux branches parallèles (8a) sont destinées à coulisser dans les logements (6). Une branche transversale (8c) relie les deux branches parallèles (8a) et forme la base d'un U horizontal qui vient en butée contre les surfaces d'arrêt (9) et (10) de la pièce de liaison (5) de manière à limiter la course de l'ensemble au cours de son déplacement schématisé par la double flèche D de la figure 2.

L'accessoire comporte un habillage extérieur (11) recouvrant la tige métallique (8). Cette dernière présente des branches montantes (8b) s'étendant sensiblement orthogonalement vers le haut à partir des branches parallèles (8a) de manière à s'engager dans des évidements prévus à cet effet dans l'habillage (11), par exemple réalisé en matière synthétique. L'extrémité des branches montantes (8b) présente des sections horizontales (8d) permettant de faciliter le positionnement, voire d'améliorer la rigidité de l'habillage (11) en s'ajustant dans lesdits évidements.

L'habillage (11) présente également une portion périphérique (13) en U recouvrant les branches parallèles (8a) et transversale (8c). Des évidements (13a) de forme complémentaire auxdites branches (8a, 8c) sont ménagés dans la partie périphérique (13). La portion périphérique desdites branches (8a) qui dépasse vers le bas participe au coulissement dans les logements (6). La face supérieure (13b) de la partie périphérique (13) présente de préférence une surface plane de manière à ne pas altérer son coulissement par rapport au côté inférieur d'un plateau.

## Revendications

1. Système de fixation d'un pied (1) sous un plateau, destiné à être monté entre l'extrémité supérieure du pied (1) et le plateau, **caractérisé en ce qu'**il comporte :
- un accessoire ou porte-accessoire chacun étant mobile entre une première position rétractée sous le plateau et une seconde position déployée hors du plateau.
- une platine (2) présentant des moyens de fixation au pied et au plateau ;
- une pièce de liaison (5) interposée entre la platine (2) et le plateau, munie de moyens de guidage (6) de l'accessoire ou porte-accessoire (11).

2. Système de fixation d'un pied (1) sous un plateau selon la revendication précédente, **caractérisé en ce que** les moyens de guidage consistent en :
- des logements (6) guidant le coulissement de l'accessoire ou du porte-accessoire (11) ;
- des butées (9, 10) limitant le déplacement par coulissement au déploiement et à la rétractation.

3. Système de fixation d'un pied (1) sous un plateau selon la revendication précédente, **caractérisé en ce que** l'accessoire ou le porte-accessoire (11) comporte deux branches parallèles coulissant dans les logements de guidage, et deux surfaces perpendiculaires à la direction du coulissement prévues pour coopérer avec les butées (9, 10).

4. Système de fixation d'un pied (1) sous un plateau selon la revendication précédente, **caractérisé en ce que** l'accessoire ou le porte-accessoire (11) comporte une base (8) en U dont les branches (8a) coulissent dans les logements (6) et dont la base (8c) sert de butée à l'extraction, et une paroi d'allure verticale servant de poignée à l'extraction et de butée en position rétractée.

5. Système de fixation d'un pied (1) sous un plateau selon la revendication précédente, **caractérisé en ce que** la paroi est constituée de deux portions séparées par une fente d'allure verticale.

6. Système de fixation d'un pied (1) sous un plateau selon l'une des revendications 4 et 5, **caractérisé en ce que** l'accessoire ou le porte-accessoire (11) est réalisé en matière synthétique et comporte une tige de rigidification métallique (8) en U incorporée dans sa base.

7. Système de fixation d'un pied (1) sous un plateau selon la revendication précédente, **caractérisé en ce que** la tige de rigidification (8) est logée dans une gorge de l'accessoire ou du porte-accessoire (11), une portion radiale de la surface des branches (8a) dépassant et étant au contact des logements de guidage (6).

8. Bureau comportant un plateau et des pieds (1) assemblés audit plateau, **caractérisé en ce que** le bureau comporte un système de fixation des pieds au plateau selon la revendication 1.

9. Bureau selon la revendication précédente, **caractérisé en ce que** les moyens de guidage consistent en :
- des logements (6) guidant le coulissement de l'accessoire ou du porte-accessoire (11) ;
- des butées (9, 10) limitant le déplacement par coulissement au déploiement et à la rétractation.

10. Bureau selon la revendication précédente, **caractérisé en ce que** l'accessoire ou le porte-accessoire (11) comporte deux branches parallèles coulissant dans les logements de guidage, et deux surfaces perpendiculaires à la direction du coulissement prévues pour coopérer avec les butées (9, 10).

11. Bureau selon la revendication précédente, **caractérisé en ce que** l'accessoire ou le porte-accessoire (11) comporte une base (8) en U dont les branches (8a) coulissent dans les logements (6) et la base (8c) sert de butée à l'extraction, et une paroi d'allure verticale servant de poignée à l'extraction et de butée en position rétractée.

12. Bureau selon la revendication précédente, **caractérisé en ce que** la paroi est constituée de deux portions séparées par une fente d'allure verticale.

13. Bureau selon l'une des revendications 11 et 12, **caractérisé en ce que** l'accessoire ou le porte-accessoire (11) est réalisé en matière synthétique et comporte une tige de rigidification métallique (8) en U incorporée dans sa base.

14. Bureau selon la revendication précédente, **caractérisé en ce que** la tige de rigidification (8) est logée dans une gorge de l'accessoire ou du porte-accessoire (11), une portion radiale de la surface des branches (8a) dépassant et étant au contact des logements de guidage (6).

## Patentansprüche

1. System zum Befestigen eines Beins (1) unter einer Tischplatte zur Montage zwischen dem oberen Ende des Beins (1) und der Tischplatte, **dadurch gekennzeichnet, dass** es Folgendes umfasst:
- ein Zubehörteil oder einen Zubehörhalter, die jeweils zwischen einer ersten eingezogenen Position unter der Tischplatte und einer zweiten zurückgezogenen Position außerhalb der Tischplatte beweglich sind,
- eine Montageplatte (2), die Mittel zum Befestigen an dem Bein und an der Tischplatte aufweist;
- ein Verbindungsstück (5), das zwischen der Montageplatte (2) und der Tischplatte eingeschoben ist und mit Mitteln (6) zum Führen des Zubehörteils oder des Zubehörhalters (11) versehen ist.

2. System zum Befestigen eines Beins (1) unter einer Tischplatte nach dem vorhergehenden Anspruch, **dadurch gekennzeichnet, dass** die Führungsmittel bestehen aus:
- Aufnahmen (6), welche die Gleitbewegung des Zubehörteils oder des Zubehörhalters (11) führen;
- Anschlägen (9, 10), welche die Gleitverlagerung beim Herausziehen und beim Zurückziehen einschränken.

3. System zum Befestigen eines Beins (1) unter einer Tischplatte nach dem vorhergehenden Anspruch, **dadurch gekennzeichnet, dass** das Zubehörteil oder der Zubehörhalter (11) zwei parallele Schenkel, die in den Führungsaufnahmen gleiten, und zwei Oberflächen, die zu der Gleitrichtung rechtwinklig sind und zum Zusammenwirken mit den Anschlägen (9, 10) vorgesehen sind, umfasst.

4. System zum Befestigen eines Beins (1) unter einer Tischplatte nach dem vorhergehenden Anspruch, **dadurch gekennzeichnet, dass** das Zubehörteil oder der Zubehörhalter (11) eine U-förmige Grundfläche (8), deren Schenkel (8a) in den Aufnahmen (6) gleiten und deren Basis (8c) als Auszugsanschlag dient, und eine senkrecht gestaltete Wand, die beim Herausziehen als Griff und in der zurückgezogenen Position als Anschlag dient, umfasst.

5. System zum Befestigen eines Beins (1) unter einer Tischplatte nach dem vorhergehenden Anspruch, **dadurch gekennzeichnet, dass** die Wand aus zwei Abschnitten besteht, die durch eine senkrecht gestaltete Spalte getrennt sind.

6. System zum Befestigen eines Beins (1) unter einer Tischplatte nach einem der Ansprüche 4 und 5, **dadurch gekennzeichnet, dass** das Zubehörteil oder der Zubehörhalter (11) aus einem Kunststoff hergestellt ist und einen U-förmigen metallischen Versteifungsstab (8) in seiner Basis umfasst.

7. System zum Befestigen eines Beins (1) unter einer Tischplatte nach dem vorhergehenden Anspruch, **dadurch gekennzeichnet, dass** der Versteifungsstab (8) in einer Rille des Zubehörteils oder des Zubehörhalters (11) aufgenommen ist, wobei ein radialer Abschnitt der Oberfläche der Schenkel (8a) über die Führungsaufnahmen (6) vorsteht und damit in Kontakt steht.

8. Schreibtisch, umfassend eine Tischplatte und Beine (1), die mit der Tischplatte zusammengebaut sind, **dadurch gekennzeichnet, dass** der Schreibtisch ein System zum Befestigen der Beine an der Tischplatte nach Anspruch 1 umfasst.

9. Schreibtisch nach dem vorhergehenden Anspruch, **dadurch gekennzeichnet, dass** die Führungsmittel bestehen aus:
- Aufnahmen (6), welche die Gleitbewegung des Zubehörteils oder des Zubehörhalters (11) führen;
- Anschlägen (9, 10), welche die Gleitverlagerung beim Herausziehen und beim Zurückziehen einschränken.

10. Schreibtisch nach dem vorhergehenden Anspruch, **dadurch gekennzeichnet, dass** das Zubehörteil oder der Zubehörhalter (11) zwei parallele Schenkel, die in den Führungsaufnahmen gleiten, und zwei Oberflächen, die zu der Gleitrichtung rechtwinklig sind und zum Zusammenwirken mit den Anschlägen (9, 10) vorgesehen sind, umfasst.

11. Schreibtisch nach dem vorhergehenden Anspruch, **dadurch gekennzeichnet, dass** das Zubehörteil oder der Zubehörhalter (11) eine U-förmige Grundfläche (8), deren Schenkel (8a) in den Aufnahmen (6) gleiten und deren Basis (8c) als Auszugsanschlag dient, und eine senkrecht gestaltete Wand, die beim Herausziehen als Griff und in der zurückgezogenen Position als Anschlag dient, umfasst.

12. Schreibtisch nach dem vorhergehenden Anspruch, **dadurch gekennzeichnet, dass** die Wand aus zwei Abschnitten besteht, die durch eine senkrecht gestaltete Spalte getrennt sind.

13. Schreibtisch nach einem der Ansprüche 11 und 12, **dadurch gekennzeichnet, dass** das Zubehörteil oder der Zubehörhalter (11) aus einem Kunststoff hergestellt ist und einen U-förmigen metallischen Versteifungsstab (8) in seiner Basis umfasst.

14. Schreibtisch nach dem vorhergehenden Anspruch, **dadurch gekennzeichnet, dass** der Versteifungsstab (8) in einer Rille des Zubehörteils oder des Zubehörhalters (11) aufgenommen ist, wobei ein radialer Abschnitt der Oberfläche der Schenkel (8a) über die Führungsaufnahmen (6) vorsteht und damit in Kontakt steht.

## Claims

1. System for attaching a leg (1) under a board, intended to be mounted between the upper end of the leg (1) and the board, **characterized in that** it comprises:
- an accessory or accessory holder mobile between a first retracted position under the board and a second position, deployed outside the board;
- a plate (2) having means for being fixed to the leg and to the board;
- a linking piece (5) interposed between the plate (2) and the board, provided with guiding means (6) of the accessory or accessory holder (11).

2. System for attaching a leg (1) under a board according to the preceding claim, **characterized in that** the guiding means consist of:
- casings (6) guiding the sliding of the accessory or of the accessory holder (11);
- stop means (9, 10) limiting the sliding movement during deployment and retraction.

3. System for attaching a leg (1) under a board according to the preceding claim, **characterized in that** the accessory or the accessory holder (11) comprises two parallel branches sliding in guide casings, and two surfaces perpendicular to the direction of sliding intended to cooperate with the stop means (9, 10).

4. System for attaching a leg (1) under a board according to the preceding claim, **characterized in that** the accessory or the accessory holder (11) comprises a U-shaped base (8), the branches (8a) of which slide in the casings (6) and the base (8c) of which acts as stop means for removal, and a vertical wall acting as a removal handle and stop means in the retracted position.

5. System for attaching a leg (1) under a board according to the preceding claim, **characterized in that** the wall is made up of two portions separated by a vertical slit.

6. System for attaching a leg (1) under a board according to one of claims 4 and 5, **characterized in that** the accessory or the accessory holder (11) is made from a synthetic material and comprises a U-shaped metal rigidifying rod (8) incorporated in its base.

7. System for attaching a leg (1) under a board according to the preceding claim, **characterized in that** the rigidifying rod (8) is housed in a groove in the accessory or the accessory holder (11), a radial portion of the surface of the branches (8a) exceeding and being in contact with the guide casings (6).

8. Desk comprising a board and legs (1) intended to be assembled to said board, **characterized in that** the desk comprises a system for attaching the legs (1) to the board according to claim 1.

9. Desk according to the preceding claim, **characterized in that** the guide means consist of:
- casings (6) guiding the sliding of the accessory or of the accessory holder (11);
- stop means (9, 10) limiting the sliding movement during deployment and retraction.

10. Desk according to the preceding claim, **characterized in that** the accessory or the accessory holder (11) comprises two parallel branches sliding in the guide casings, and two surfaces perpendicular to the direction of sliding intended to cooperate with the stop means (9, 10).

11. Desk according to the preceding claim, **characterized in that** the accessory or the accessory holder (11) comprises a U-shaped base (8), the branches (8a) of which slide in the casings (6) and the base (8c) of which acts as stop means for extraction, and a vertical wall acting as an extraction handle and stop means in the retracted position.

12. Desk according to the preceding claim, **characterized in that** the wall is made up of two portions separated by a vertical slit.

13. Desk according to one of claims 11 and 12, **characterized in that** the accessory or the accessory holder (11) is made from a synthetic material and comprises a U-shaped metal rigidifying rod (8) incorporated in its base.

14. Desk according to the preceding claim, **characterized in that** the rigidifying rod (8) is housed in a groove of the accessory or the accessory holder (11), a radial portion of the surface of the branches (8a) exceeding and being in contact with the guide casings (6).
